# EUROPEAN PATENT SPECIFICATION

(11) **EP 2 345 501 B1**
(45) Date of publication and mention of the grant of the patent: **18.02.2015**
(21) Application number: 10195048.3
(22) Date of filing: 15.12.2010
(51) Int. Cl.: B23K 26/14, B23K 26/34, B05B 7/08

(54) **Spray nozzle**
Sprühdüse
Buse de pulvérisation

(30) Priority: 12.01.2010 GB 201000440
(43) Date of publication of application: 20.07.2011
(73) Proprietor: Rolls-Royce plc, London SW1E 6AT (GB)
(72) Inventor: Clark, Daniel, Derby, Derbyshire DE56 1TG (GB); Allen, Jeffrey, Derby, Derbyshire DE23 3RJ (GB); Kell, James, Nottingham, Nottinghamshire NG7 1AA (GB)
(74) Representative: Roberts, Nicholas John

(56) References cited:
- EP-A2- 1 110 616
- EP-A2- 1 118 387
- EP-A2- 1 887 107
- US-B1- 6 316 744

## Description

The present invention relates to a laser deposition apparatus.

Laser cladding is a technique that is generally used either to deposit a coating onto a component in order to rebuild the component, or to deposit a coating onto a substrate in order to provide a protective layer.

A laser cladding apparatus typically comprises a laser which forms a molten pool on a substrate into which a stream of metal powder entrained in a gas can be blown. This results in a track (otherwise known as a clad) being deposited on the substrate. US 6,316,744 discloses a laser cladding apparatus in which the metal powder is delivered coaxially with, and around, the laser beam.

The intensity of the laser beam usually has a Gaussian distribution which means that the centre of the melt pool is at a significantly higher temperature than the temperature of the surrounding areas. If it is necessary to deposit a relatively wide coating then this must be done by overlapping a series of clads side-by-side. If only the laser beam diameter is increased then the temperature at the centre of the melt pool is such that high levels of vaporisation of additive material may occur, or the substrate may melt to an excessive depth. Further, the surrounding substrate material may be disrupted to an excessive depth and the deposited coating may dilute into the substrate. In some application dilution of the clad by the parent substrate may occur. If a number of clads are overlapped side-by-side then the reworking of previously deposited clads can induce unwanted material properties. Further, cavities may form between adjacent clads which is undesirable, and the surface formed may be uneven.

In a previously considered laser cladding apparatus, a laser beam is directed towards a jet of metal powder delivered from a nozzle. However, the powder jet tends to diverge on exiting the nozzle which is undesirable as it results in an uneven deposition layer. The effect of the divergence can be mitigated by positioning the nozzle closer to the substrate surface. However, if the nozzle is too close to the surface then the nozzle may be heated by reflected laser energy and by heat radiating from the melt pool; this is undesirable. Further, material from the melt pool may adhere to the nozzle which can result in the shape and size of the nozzle opening being undesirably altered. Such material can also form external accretions on the nozzle which can restrict access of the nozzle to some geometries and can scratch components.

It is therefore desirable to provide a laser deposition apparatus capable of delivering a stream of powder which remains stable over a substantial distance from the nozzle, so wide coating layers of a substantially uniform thickness can be deposited without requiring the nozzle to approach close to the substrate surface.

EP1118387 A2 discloses a nozzle assembly having shroud members which selectively emit a material along at least one edge of emitted material. The selectively emitted material substantially prevents and/or eliminates the turbulent shear layer which is formed within the emitted material.

According to a first aspect of the present invention there is provided a laser deposition apparatus according to claim 1.

The elongate nozzle aperture comprises first and second end portions located either side of a central portion, wherein the heights of the first and second end portions are greater than that of the central portion.

The spray nozzle may further comprise an upper guide plate located above the upper elongate gas aperture that extends in the general direction of the flow of powder ejected from the spray nozzle when in use. The spray nozzle may further comprise a lower guide plate located below the lower elongate gas aperture that extends in the general direction of the flow of powder ejected from the spray nozzle when in use.

A wall of the powder supply chamber may be provided with ribs which extend generally in the direction of flow through the powder supply chamber in use. These ribs would help to guide the flow. Alternatively or in addition, the powder supply chamber may be provided with baffles which extend generally in a direction perpendicular to the direction of flow through the powder supply chamber in use. Such baffles would help to promote turbulence in the supply chamber.

Preferably the elongate nozzle aperture and upper and lower elongate gas apertures are formed in a nozzle body.

Embodiments of the present invention will now be described, by way of example only, with reference to the accompanying drawings, in which:
Figure 1 schematically shows an illustrative example of a spray nozzle not in accordance with the spray nozzle of the claimed laser cladding apparatus;
Figure 2 schematically shows a cross-sectional view of the spray nozzle of Figure 1;
Figure 3 schematically shows a laser cladding apparatus including a spray nozzle;
Figure 4 schematically shows an end view of the spray nozzle of Figure 1 and a coating layer deposited using it;
Figure 5 schematically shows a cross-sectional view of a spray nozzle having guide plates that can be used with the invention;
Figure 6 schematically shows a cross-sectional view of a spray nozzle having guide plates that can be used with the invention; and
Figure 7 schematically shows an end view of a spray nozzle used in an embodiment of the invention.

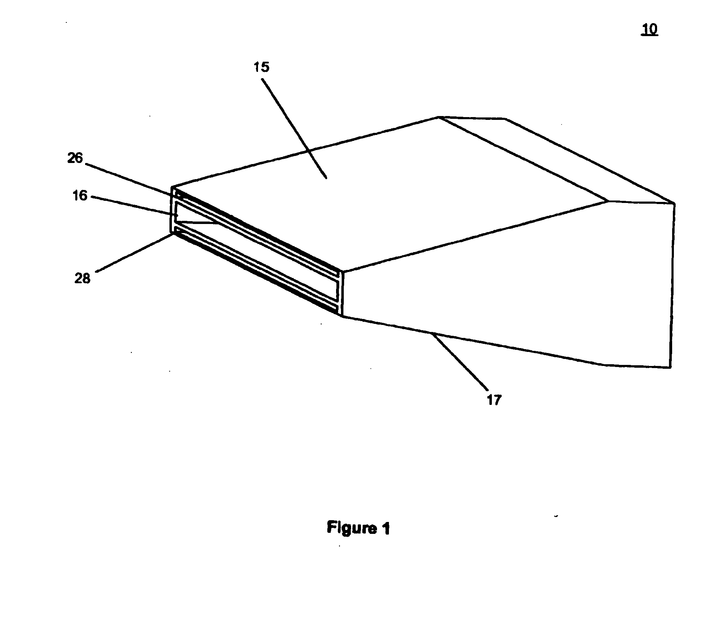

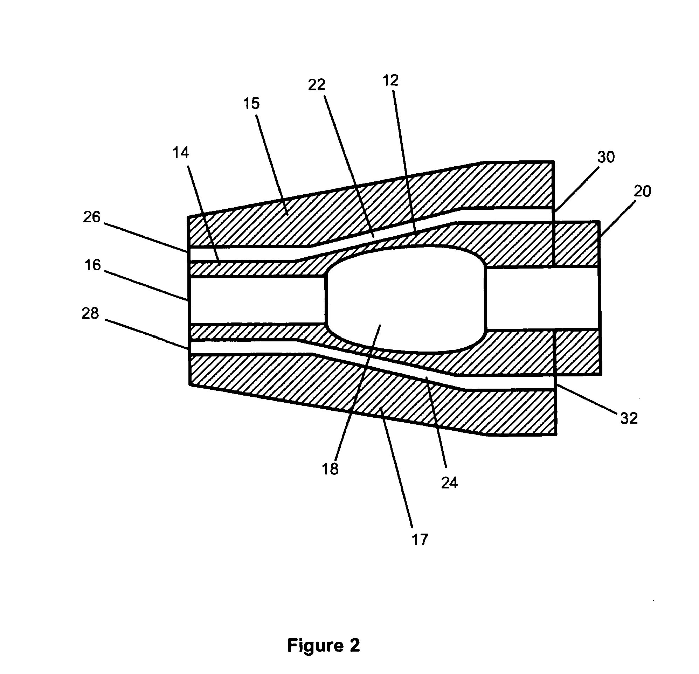

Figures 1 and 2 show a spray nozzle 10 comprising a chamber body 12, a nozzle body 14 and a delivery duct 20. An elongate nozzle aperture 16 is provided in the end of the nozzle body 14. The elongate nozzle aperture 16 has a substantially constant width along its length. The nozzle aperture 16 extends through the nozzle body 14 and leads to a powder supply chamber 18, which is formed by the chamber body 12, and is in fluid communication with the delivery duct 20.

Upper and lower outer walls 15, 17 are spaced from the chamber body 12 and the nozzle body 14 and define upper and lower fluid ducts 22, 24 between the walls 15, 17 and the chamber/nozzle body 12, 14. The upper and lower fluid ducts 22, 24 have upper and lower inlets 30, 32 respectively for introducing a gas into the ducts 22, 24. The upper and lower outer walls 15, 17 also define an upper elongate gas aperture 26 above the nozzle aperture 16 and a lower elongate gas aperture 28 below the nozzle aperture 16. The upper and lower elongate gas apertures 26, 28 are parallel to the elongate nozzle aperture 16 and are all of approximately the same length. When a gas is supplied to the ducts 22, 24 via the inlets 30, 32 the gas is discharged from the upper and lower elongate gas apertures 26, 28 as sheets.

Although the walls 15, 17 are shown in Figures 1-3 as being integral with the chamber body 12, they could form part of a separate fairing mounted over the chamber body 12. Such a fairing may be displaceable on the chamber body 12 and may terminate short of the end face of the chamber body 12 at which the nozzle body 14 emerges.

In use, metal powder is supplied to the spray nozzle 10 via the delivery duct 20 under pressure using a carrier gas. The metal powder and carrier gas mix in the powder supply chamber 18, which acts as a plenum chamber, and metal powder exits the elongate nozzle aperture 16 as a wide sheet (or stream) of powder. Carrier gas is supplied to the ducts 22, 24 via the inlets 30, 32 and the gas is discharged from the upper and lower elongate gas apertures 26, 28 as sheets which are located either side, and therefore sandwich, the powder sheet.

The spray nozzle of Figure 1 differs from a spray nozzle used in an embodiment of the invention only in that the width of the elongate nozzle aperture is substantially constant along its length. In accordance with the invention, the width of the nozzle aperture 16 varies along its length, with the nozzle aperture 16 being narrower at the centre than at the ends.

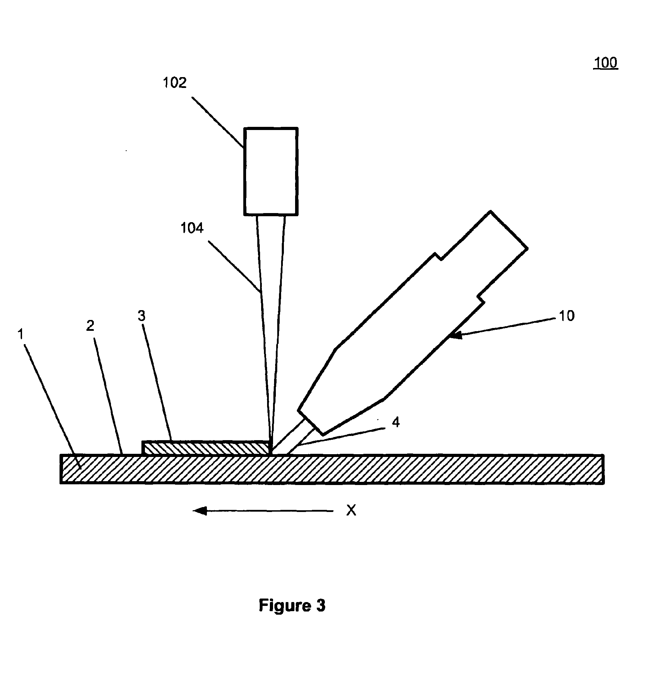

With reference to Figure 3, the spray nozzle 10 is used with a laser cladding apparatus 100 which is arranged to deposit a coating 3 onto the surface 2 of a substrate 1. In addition to the spray nozzle 10, the laser cladding apparatus 100 comprises a laser 102 capable of generating a wide laser beam 104, means for moving the substrate 1, a powder feeder (not shown) for feeding a metal powder to the nozzle 10 via the delivery duct 20, and a carrier gas supply (not shown) for supplying a carrier gas to the inlets 30, 32. As the substrate 1 is moved in direction X, the nozzle 10 emits a sheet (or stream) of powder 4 from the nozzle aperture 16 with a blanket of carrier gas, emitted from the upper and lower gas apertures 26, 28, located either side. The metal powder sheet 4 interacts with the laser beam 104 and is melted to form a melt pool on the substrate surface which solidifies as a coating 3 on the surface 2. The width of the laser beam 104 is comparable to that of the powder sheet 4 which ensures that the whole width of the powder sheet 4 is melted and deposited as a coating 3. The wide laser beam 104 may be generated by any of the following beam manipulation techniques: scanning, diode, refractive, diffractive, ancillary, array. Multiple laser beams could also be used side-by-side in order to generate a wide laser beam. Other techniques for generating a wide laser beam will be readily apparent to one skilled in the art.

The Coand 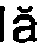 effect causes the blanket streams of carrier gas ejected from the upper and lower gas apertures 26, 28 to be attracted to the powder sheet 4 ejected from the nozzle aperture 16. This helps to ensure that the powder is ejected from nozzle aperture 16 as a sheet, the gas-entrained powder issuing as an uninterrupted lamellar flow. This ensures that a coating of an even thickness is deposited on the substrate and helps to prevent the powder sheet from diverging. Consequently the powder coating is improved, because the bulk of the powder lands in the melt pool on the substrate surface 2, without excess overspray.

The spray nozzle 10 can deposit a focussed powder sheet (or stream) which does not diverge to the same extent as powder ejected from conventional nozzles. This means that the spray nozzle 10 can be located further away from the surface of the substrate which the coating is to be deposited on, without reducing the uniformity of the coating layer deposited.

The metal powder may be of a uniform composition or may be a mixture of two or more powders. The carrier gas may be an inert gas such as argon, for example. Within the powder supply chamber 18 the metal powder and carrier gas mix in order to ensure that the powder sheet 4 delivered by the nozzle apertures 16 is uniform in both composition and delivery rate.

The composition of the carrier gas that exits the elongate gas apertures 26, 28 may be the same as the composition of the carrier gas used to deliver the metal powder; this may help to avoid mixing of gases. The carrier gas exiting the elongate gas apertures 26, 28 may exit at a different velocity from the powder sheet exiting the nozzle aperture 16. Further, the carrier gas exiting the elongate gas apertures 26, 28 may be at a higher temperature than that of the powder sheet so that the gas pre-heats the powder sheet before it interacts with the laser.

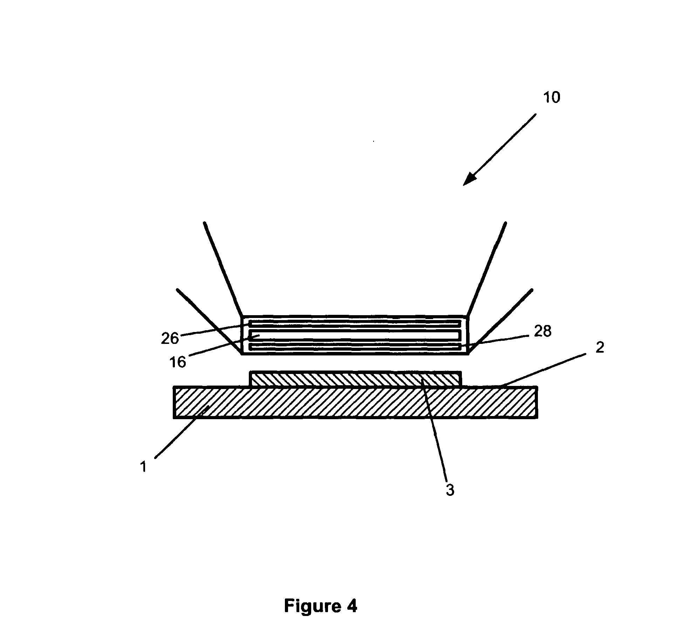

As shown in Figure 4, the laser cladding apparatus 100 described above can deposit a wide coating 3 of a substantially uniform thickness. The width of the coating 3 is approximately the same as the length of the elongate nozzle aperture 16. The edges of the coating are substantially perpendicular to the substrate surface 2. This allows another coating layer to be deposited next to it without requiring an overlap and therefore results in a coating having a substantially flat surface. For wider deposits an enhanced level of overlap control can be achieved by regulating metal input distribution as mass captured by the pool. This improves the mechanical properties of the cladding 3 and reduces the overall amount of material used when compared with a conventional apparatus that deposits a number of narrow coating layers side-by-side and overlapping.

The geometry of the elongate nozzle aperture 16 as shown in Figure 4 is not in accordance with the geometry of the elongate nozzle aperture of the spray nozzle of the claimed laser cladding apparatus. The geometry of the elongate nozzle aperture 16 can be altered in order to obtain a desired powder and gas distribution which facilitates mass capture efficiency in unique applications. This helps regulate the temperature of the melt pool and hence the solidification and cooling rates.

The powder stream has a reduced tendency for divergence which allows greater standoff from the substrate. This makes the nozzle less susceptible to spatter or particulate ejecta entering and blocking the nozzle.

The blanket streams of carrier gas allow a constrained powder stream without requiring a high gas velocity. This means that high volumes of gas are not required and also prevents powder particles reaching high velocities which would risk them bouncing out of the process zone.

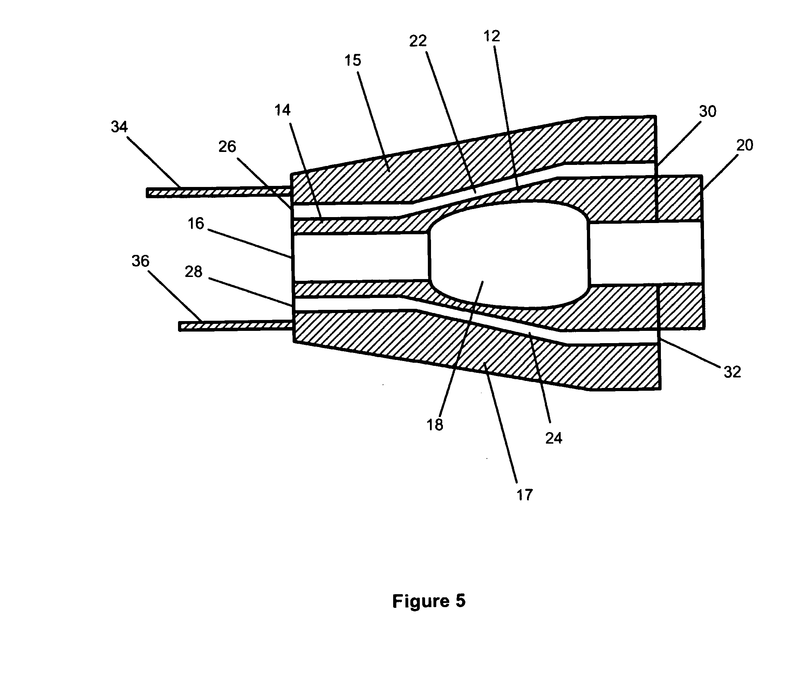

Figure 5 shows a spray nozzle 10 that can be used with the laser cladding apparatus 100 of Figure 3. This spray nozzle 10 is similar to that shown in Figures 1-2. The spray nozzle 10 further comprises upper and lower guide plates 34, 36 that are attached to the outer walls 15, 17 and project away from the walls 15, 17 and nozzle body 14 in a direction substantially perpendicular to the end faces. The upper guide plate 34 is positioned just above the upper elongate gas aperture 26 and the lower guide plate 36 is positioned just below the lower elongate gas aperture 28. The upper guide plate 34 is longer than, and therefore projects beyond, the lower guide plate 36.

In use the guide plates 34, 36 help to guide the powder and the carrier gas. Since the upper guide plate 34 is longer than the lower guide plate 36 the spray nozzle 10 can be used at an angle relative to the substrate surface whilst ensuring that the guide plates 34, 36 fulfil their function of guiding the powder and the carrier gas.

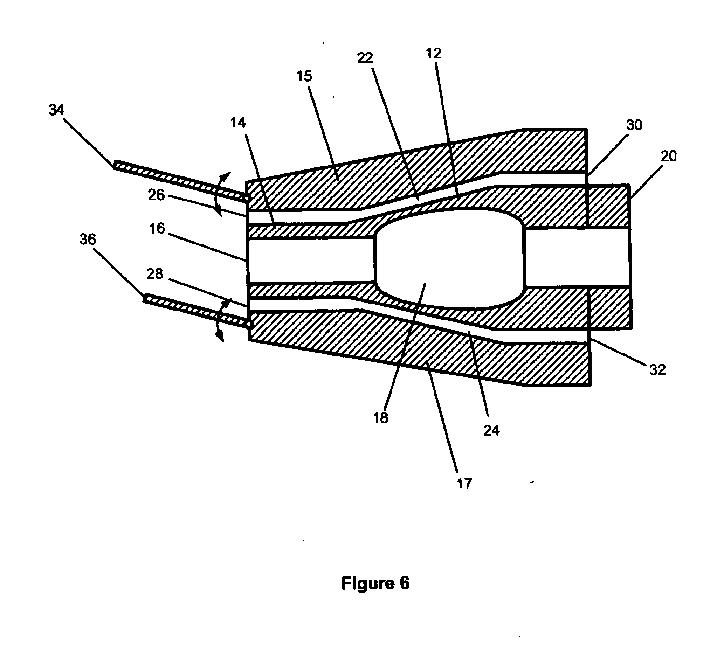

Figure 6 shows a spray nozzle 10 which is similar to that of Figure 5 except the guide plates 34, 36 are pivotable with respect to the nozzle body 14 and the outer walls 15, 17. This allows the powder and gas streams to be directed. In an alternative arrangement the guide plates 34, 36 are capable of moving forwards and backwards with respect to the direction of flow of the powder stream issuing from the nozzle aperture 16.

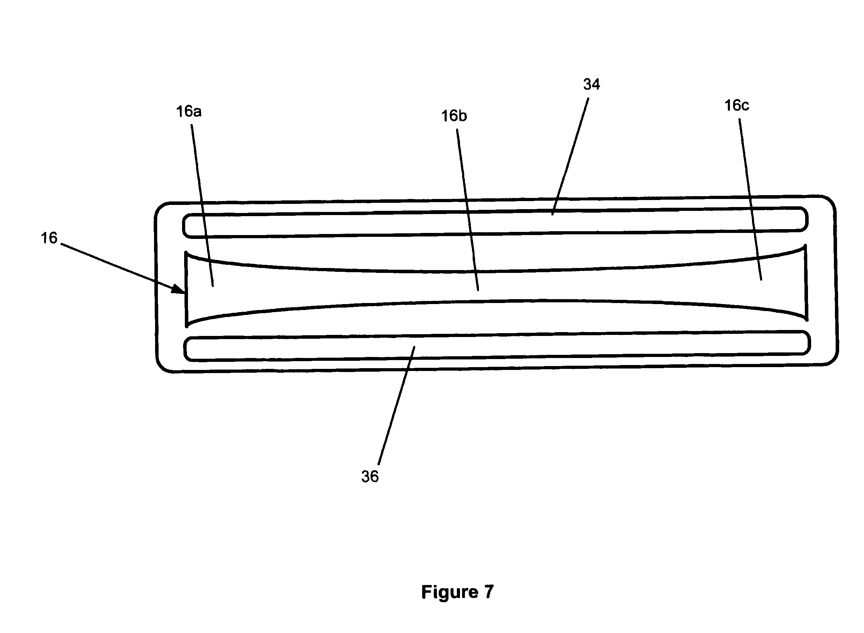

Figure 7 shows a spray nozzle 10 which is similar to that of Figure 1. However, the elongate nozzle aperture 16 does not have a constant height. Instead, the nozzle aperture has first end portion 16a, a second end portion 16c and a central portion 16b. The first and second end portions 16a, 16c are located either side of the central portion 16b and the heights of the first and second end portions 16a, 16c are greater than that of the central portion 16b. The nozzle aperture 16 gradually reduces in height from either end towards the centre. This arrangement may be beneficial for particular laser deposition techniques. In some embodiments the width of the upper and lower gas apertures may vary with length.

In some embodiments it may be possible to twist (or tilt) the spray nozzle 10 about a central axis located along the length direction of the spray nozzle 16. This has the effect of reducing the width of the coating deposited whilst maintaining a uniform thickness.

The spray nozzle 10 may be cooled by either the carrier gas exiting the elongate gas apertures 26, 28 or by a closed cooling system such as a water jacket.

It may be desirable to use two or more spray nozzles 10 with the laser cladding apparatus 100. For example, two nozzles 10 may be arranged side-by-side, on top of one another, or positioned either side of the laser beam 104 but directed towards the same target.

## Claims

1. A laser deposition apparatus comprising a laser (102) arranged to generate a wide laser beam (104) and a spray nozzle (10), the spray nozzle (10) comprising:
an elongate nozzle aperture (16);
a powder supply chamber (18) in fluid communication with the elongate nozzle aperture (16) and arranged in use to supply powder to the nozzle aperture (16) under pressure so as to cause a wide powder stream to be ejected from the nozzle aperture (16);
upper (26) and lower (28) elongate gas apertures located above and below the elongate nozzle aperture (16) respectively and extending substantially parallel to the elongate nozzle aperture (16), wherein the upper (26) and lower (28) elongate apertures are arranged to eject a wide gas stream above and below the wide powder stream to thereby entrain the powder; and
the elongate nozzle aperture (16) comprises first and second end portions located either side of a central portion (16b), wherein the heights of the first (16a) and second (16c) end portions are greater than that of the central portion (1 6b).

2. A laser deposition apparatus according to any preceding claim, further comprising an upper guide plate (34) located above the upper elongate gas aperture (26) and extending in the general direction of the flow of powder ejected from the spray nozzle (10) when in use.

3. A laser deposition apparatus according to any preceding claim, further comprising a lower guide plate (36) located below the lower elongate gas aperture (28) and extending in the general direction of the flow of powder ejected from the spray nozzle (10) when in use.

4. A laser deposition apparatus according to any preceding claim, wherein a wall of the powder supply chamber is provided with ribs which extend generally in the direction of flow through the powder supply chamber (18) in use.

5. A laser deposition apparatus according to any preceding claim, wherein the elongate nozzle aperture (16) and upper (26) and lower (28) elongate gas apertures are formed in a nozzle body (14).

## Patentansprüche

1. Laserdepositionsvorrichtung, umfassend einen Laser (102), der so angeordnet ist, dass er einen breiten Laserstrahl (104) erzeugt, und eine Sprühdüse (10), wobei die Sprühdüse (10) folgendes umfasst:
eine elongierte Düsenöffnung (16);
eine Pulverversorgungskammer (18), die sich in Fluidkommunikation mit der elongierten Düsenöffnung (16) befindet und im Einsatz so angeordnet ist, dass Pulver unter Druck der Düsenöffnung (16) zugeführt wird, um zu bewirken, dass ein breiter Pulverstrom von der Düsenöffnung (16) ausgestoßen wird;
obere (26) und untere (28) elongierte Gasöffnungen, die entsprechend oberhalb bzw. unterhalb der elongierten Düsenöffnung (16) angeordnet sind und sich im Wesentlichen parallel zu der elongierten Düsenöffnung (16) erstrecken, wobei die oberen (26) und unteren (28) elongierten Öffnungen so angeordnet sind, dass sie einen breiten Gasstrom über und unter dem breiten Pulverstrom ausstoßen, um dadurch das Pulver mitzureißen; und
wobei die elongierte Düsenöffnung (16) erste und zweite Endstücke umfasst, die auf jeder Seite eines zentralen Teilstücks (16b) angeordnet sind, wobei die Höhen der ersten (16a) und zweiten (16c) Endstücke größer sind als die Höhen des zentralen Teilstücks (16b).

2. Laserdepositionsvorrichtung nach einem der vorstehenden Ansprüche, ferner umfassend eine obere Führungsplatte (34), die über der oberen elongierten Gasöffnung (26) angeordnet ist und sich in die allgemeine Richtung des Pulverstroms erstreckt, der im Einsatz aus der Sprühdüse (10) ausgestoßen wird.

3. Laserdepositionsvorrichtung nach einem der vorstehenden Ansprüche, ferner umfassend eine untere Führungsplatte (36), die unter der unteren elongierten Gasöffnung (28) angeordnet ist und sich in die allgemeine Richtung des Pulverstroms erstreckt, der im Einsatz aus der Sprühdüse (10) ausgestoßen wird.

4. Laserdepositionsvorrichtung nach einem der vorstehenden Ansprüche, wobei eine Wand der Pulverversorgungskammer mit Rippen versehen ist, die sich allgemein im Einsatz in die Richtung des Stroms durch die Pulverversorgungskammer (18) erstreckt.

5. Laserdepositionsvorrichtung nach einem der vorstehenden Ansprüche, wobei die elongierte Düsenöffnung (16) und die oberen (26) und unteren (28) elongierten Gasöffnungen in einem Düsenkörper (14) ausgebildet sind.

## Revendications

1. Appareil de dépôt par laser comprenant un laser (102) agencé pour générer un faisceau laser large (104) et une buse de pulvérisation (10), la buse de pulvérisation (10), comprenant :
une ouverture (16) de buse allongée ;
une chambre d'alimentation (18) en poudre en communication fluidique avec l'ouverture (16) de buse allongée et agencée lors de l'utilisation pour fournir une poudre à l'ouverture (16) de buse sous pression de sorte à provoquer un large flux de poudre à éjecter de l'ouverture (16) de buse ;
des ouvertures de gaz allongées supérieure (26) et inférieure (28) situées respectivement au-dessus et en dessous de l'ouverture (16) de buse allongée et s'étendant sensiblement parallèlement à l'ouverture (16) de buse allongée, dans lequel les ouvertures allongées supérieure (26) et inférieure (28) sont agencées pour éjecter un flux de gaz large au-dessus et en dessous du flux de poudre large pour ainsi entraîner la poudre ; et
l'ouverture (16) de buse allongée comprend des première et seconde parties d'extrémité situées de part et d'autre d'une partie centrale (16b), dans lequel les hauteurs des première (16a) et seconde (16c) parties d'extrémité sont supérieures à celle de la partie centrale (16b).

2. Appareil de dépôt par laser selon l'une quelconque des revendications précédentes, comprenant en outre une plaque de guidage supérieure (34) située au-dessus de l'ouverture de gaz allongée supérieure (26) et s'étendant dans la direction générale du flux de poudre éjecté par la buse de pulvérisation (10) lors de l'utilisation.

3. Appareil de dépôt par laser selon l'une quelconque des revendications précédentes, comprenant en outre une plaque de guidage inférieure (36) située en dessous de l'ouverture de gaz allongée inférieure (28) et s'étendant dans la direction générale du flux de poudre éjecté par la buse de pulvérisation (10) lors de l'utilisation.

4. Appareil de dépôt par laser selon l'une quelconque des revendications précédentes, dans lequel une paroi de la chambre d'alimentation en poudre comprend des nervures qui s'étendent généralement dans la direction de flux à travers la chambre d'alimentation (18) en poudre lors de l'utilisation.

5. Appareil de dépôt par laser selon l'une quelconque des revendications précédentes, dans lequel l'ouverture (16) de buse allongée et les ouvertures de gaz allongées supérieure (26) et inférieure (28) sont formées dans un corps (14) de buse.
